Europäisches Patentamt

European Patent Office

Office européen des brevets

(19)

(11) Veröffentlichungsnummer: **0 057 157**
A2

(12) # EUROPÄISCHE PATENTANMELDUNG

(21) Anmeldenummer: 82810005.7

(22) Anmeldetag: 08.01.82

(51) Int. Cl.³: **G 09 B 29/10**

(30) Priorität: 22.01.81 CH 391/81

(43) Veröffentlichungstag der Anmeldung:
04.08.82 Patentblatt 82/31

(84) Benannte Vertragsstaaten:
AT BE DE FR GB IT LU NL SE

(71) Anmelder: Kuhn, Günther
Kronenplatz 2
CH-7310 Bad-Ragaz(CH)

(72) Erfinder: Kuhn, Günther
Kronenplatz 2
CH-7310 Bad-Ragaz(CH)

(74) Vertreter: Feldmann, Clarence Paul et al,
c/o Patentanwaltsbüro FELDMANN AG Postfach
Kanalstrasse 17
CH-8152 Glattbrugg(CH)

(54) Vorrichtung, die eine frei wählbare Markierung auf Landkarten und anderen graphischen Darstellungen erlaubt.

(57) Die Vorrichtung gestattet an frei wählbaren Stellen auf einer Landkarte oder einer anderen graphischen Darstellung leuchtende, stecknadelartige Elemente anzubringen. Die Landkarte (19) ist dazu auf einer sandwichartig aufgebauten Unterlage aufgezogen. Die Unterlage umfasst drei Schichten (14, 16, 18) aus isolierendem, durchstechbaren Material, wie Kork oder Hartschaumstoff, zwischen denen zwei durchstechbare, elektrisch leitende Schichten (14, 17) angebracht sind. Die beiden letzgenannten Schichten liegen an einer Spannungsquelle. Wird die Karte (19) an willkürlicher Stelle mit einem stecknadelartigen Element (3, 4, 5) durchstochen und bis zum Kopf desselben eingedrückt, wird eine im Kopf angebrachte Glühbirne oder Leuchtdiode aufleuchten. Der nadelartige Teil des Elementes enthält nämlich einen massiven und einen Hohlnadelteil, die elektrisch voneinander isoliert sind. Der massive Teil macht Kontakt mit der Schicht (15), der andere Teil mit der Schicht (17).

Fig.4

0057157

Günther Kuhn

CH-7310  Bad Ragaz

Vorrichtung, die eine frei wählbare Markierung auf Landkarten und anderen graphischen Darstellungen erlaubt

Die Erfindung bezieht sich auf eine Vorrichtung, die eine frei wählbare Markierung auf Landkarten oder anderen graphischen Darstellungen, die auf einer Unterlage aufgezogen sind, mittels in die Unterlage einsteckbaren, stecknadelartigen Elementen ermöglicht. Derartige Vorrichtungen, bei denen die Markierungen mittels Stecknadeln mit grossen Köpfen von unterschiedlicher Farbe oder Grösse angebracht werden, sind bekannt. Es sind auch Vorrichtungen bekannt, bei denen an bestimmten Stellen leuchtende Köpfe angebracht sind. Bei diesen Vorrichtungen sind aber die betreffenden Stellen von vornherein festgelegt und nicht frei wählbar.

Aufgabe der Erfindung

Die Erfindung stellt sich zur Aufgabe eine Vorrichtung der zweitgenannten Art zu schaffen, die erlaubt die Stellen, an denen die elektrisch leuchtenden Köpfe sich befinden sollen durch nachträgliches Einstecken der stecknadelartigen Elemente frei zu wählen. Eine einfache Erweiterung sollte ermöglichen, wahlweise eine Gruppe von Köpfen oder eine andere Gruppe von Köpfen aufleuchten zu lassen. Auf einer Landkarte könnte dann eine Gruppe beispielsweise die Stellen der Elektrizitäts-Erzeugerstätten (Zentralen) anzeigen und eine zweite Gruppe die Verteilerstationen (Unterwerke) anzeigen. Es sollten sogar noch mehr als nur zwei Gruppen, unabhängig voneinander oder gemeinsam zum Aufleuchten gebracht werden können.

## Die Erfindung

Die Erfindung löst die gestellte Aufgabe mit einer Vorrichtung, die sich dadurch auszeichnet, dass die Unterlage sandwichartig aus mindestens zwei Schichten von wechselweise durchstechbarem, isolierenden und durchstechbarem, elektrisch leitenden, an eine Spannungsquelle angeschlossenem Material aufgebaut ist, und dass die stecknadelartigen Elemente einen elektrisch leuchtenden Kopf aufweisen, der mit zwei nadelartigen Teilen versehen ist, die eine unterschiedliche Länge, entsprechend der Dicke der zu durchstechenden, isolierenden Schichten aufweisen und von denen der längere Teil entlang einem Teil seiner Länge mit einer isolierenden Schicht versehen ist.

kug 2

<u>Die Zeichnung</u>

Die Zeichnung zeigt einige Ausführungsformen des Erfindungsgegenstandes und zwar in

Figur 1 eine Vorrichtung mit einer aufgezogenen Landkarte und einigen
willkürlich eingesteckten stecknadelartigen Elementen mit leuchtendem
Kopf,

Figur 2 einen Schnitt durch die linke Hälfte
der Vorrichtung nach Figur 1, längs
der Linie A - B,

Figur 3 einen Schnitt durch die rechte Hälfte
der Vorrichtung nach Figur 1, die mehr
Schichten aufweist,

Figur 4 und 5 Schnitte wie bei Figur 2 und 3,
in grösserem Masstab, in denen mehrere
Details ersichtlich sind und

Figur 6 und 7 einen Schnitt und eine Ansicht
von unten eines stecknadelartigen
Elementes.

<u>Beschreibung</u>

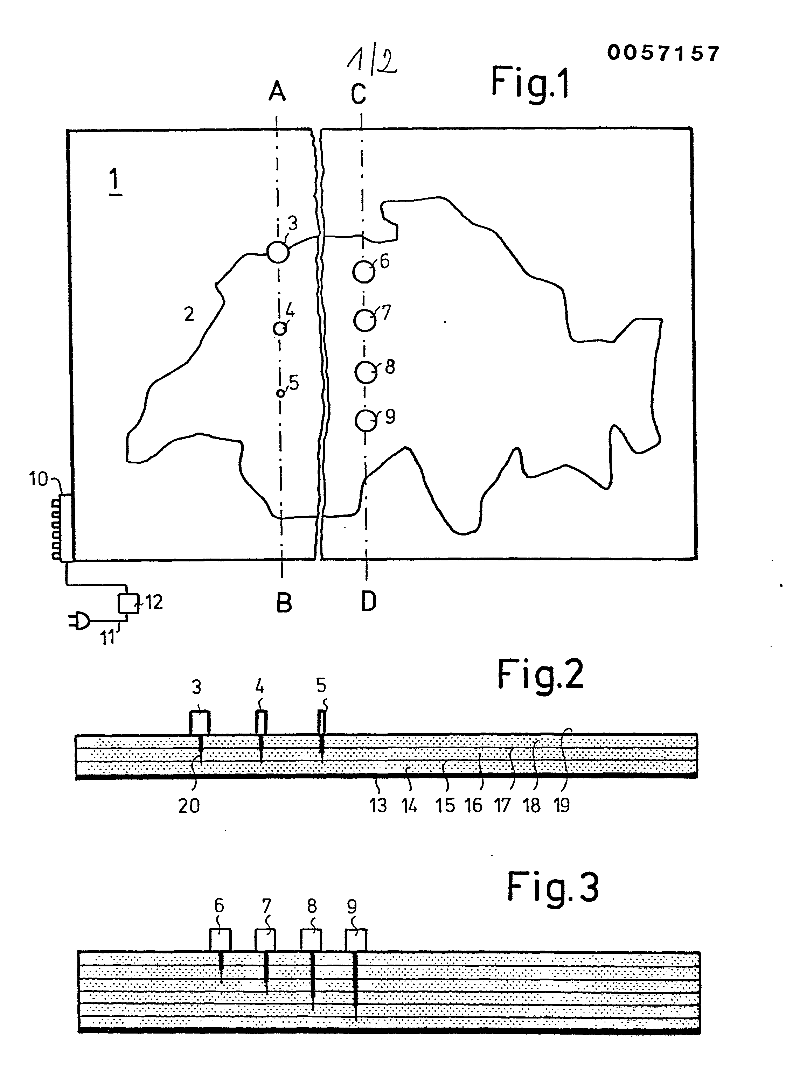

Die in Figur 1 dargestellte Vorrichtung zeigt eine auf

kug 2

einer Unterlage aufgezogene Landkarte, auf der die Umrisslinie 2 das Gebiet der Schweiz anzeigt. Die linke Hälfte der Vorrichtung umfasst sechs Schichten, auf denen die Landkarte 19 aufgeklebt ist. Die Schichten 14,16,18 bestehen aus relativ weichem isolierenden, durchstechbarem Material wie Kork, weichem Holz- oder Papierfaserplatten oder Hart-Kunststoff-Schaumplatten. Zwischen diesen drei isolierenden Schichten befinden sich zwei leitende Schichten 15,17, die aus Metallfolien bestehen. Unter Umständen könnten diese Schichten auch aus einer einseitigen,oberen,metallischen,leitenden Beschichtung der Platten 14 und 16 oder einer einseitigen, unteren Beschichtung der Platten 16 und 18 bestehen. Die unterste Schicht 13 dient lediglich der mechanischen Festigkeit der Vorrichtung.

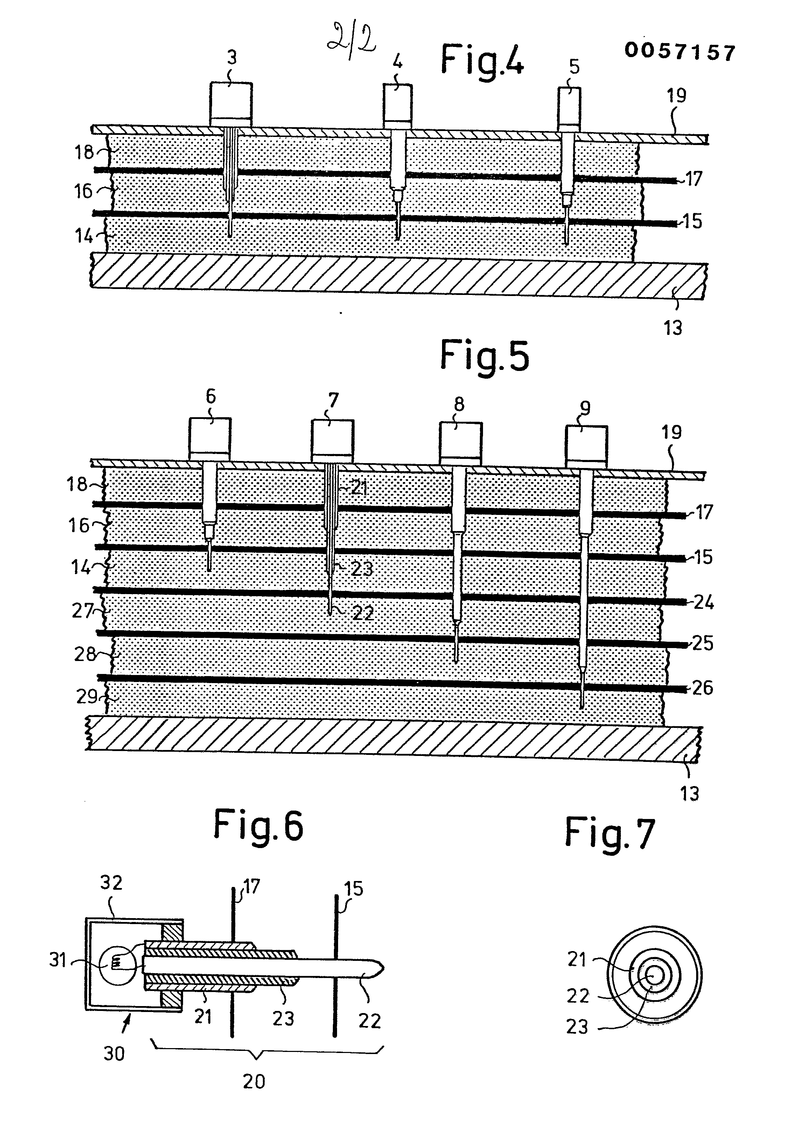

Die stecknadelartigen Elemente 3 - 5 durchstechen beide leitenden Schichten 15 und 17. Ihr Aufbau ist in Figur 6 und 7 dargestellt. Das nadelartige Ende 20 umfasst die Teile 21 und 22, die konzentrisch aufgebaut sind. Teil 22 ist eine massive Nadel, während Teil 21 hohl ist. Zwischen den beiden Teilen befindet sich eine isolierende Schicht 23. Die Schicht 23 könnte aus einer isolierenden Lackschicht bestehen, auf der eine elektrisch leitende

kug 2

Schicht 21 aufgebracht ist. Die Schicht 21 könnte eine elektrisch leitende Lackschicht oder eine aufgedämpfte oder aufgespritzte Metallschicht sein. In eingestecktem Zustand macht Teil 21 mit der Schicht 17 und Teil 22 mit der Schicht 15 Kontakt. Die im Kopf 30 untergebrachte Glühbirne leuchtet daher, wenn die beiden leitenden Schichten 15,17 an eine Spannungsquelle angeschlossen sind.

Statt einer Glühbirne 31 könnte natürlich auch eine weniger Strom brauchende Leuchtdiode angebracht sein. Je nach Ausführung ist der Kopf 30 mit einer grösseren oder kleineren durchscheinenden Abdeckung 32 versehen. Statt einem konzentrischen Aufbau könnten auch zwei nebeneinander und parallel zueinander verlaufende Teile 21,22 angeordnet sein. Nur der längere Teil 22 bräuchte eine isolierende Schicht, damit er die Schicht 17 durchstossen kann, ohne mit dieser Kontakt zu machen.

In Figur 4 ist die Anordnung der Elemente 3,4,5 in grösserem Masstab dargestellt. Sie unterscheiden sich lediglich in der Grösse und gegebenenfalls der Farbe der leuchtenden Köpfe. Deutlich ersichtlich ist hier, dass die hohlnadelartigen Teile 21 mit der Schicht 17,

kug 2

die massiven Nadeln 22 mit der Schicht 15 in elektrischer Verbindung stehen.

In Figur 1 sind die zum Betrieb erforderlichen Zusatzgeräte 10 - 12 dargestellt. 12 ist ein Transformator, der die Netzspannung auf den für den Betrieb der Lämpchen oder Dioden erforderlichen Wert heruntertransformiert. Die Leitungen vom Netz zum Transformator und vom Transformator zur Vorrichtung sind mit 11 bezeichnet. Mit 10 ist ein Schaltgerät angedeutet, das dann erforderlich ist, wenn wahlweise verschiedene Gruppen aufleuchten sollen. Dies wird nachfolgend noch beschrieben. Werden statt Lämpchen Leuchtdioden verwendet, muss noch ein Gleichrichter vorgesehen werden. Zur Vermeidung von Schäden durch Kurzschluss ist im Sekundärkreis eine nicht dargestellte Sicherung angebracht. Ein Kurzschluss kann nämlich leicht entstehen, wenn versehentlich eine normale Stecknadel in die Vorrichtung eingesteckt wird.

Wahlweises Einschalten verschiedener Gruppen

Statt wie in Figur 2 und 4 die Unterlage mit nur zwei leitenden Schichten 15,17 aufzubauen, kann man derer mehrere einbauen, wie Figur 3 und 5 zeigen. Die rechte Hälfte der Vorrichtung enthält eine Unterlage mit fünf leitenden Schichten 15,17,24,25,26 zwischen denen sich isolierende Platten 14,16,18,27,28 befinden.

Das stecknadelartige Element 6 ist elektrisch an die Schichten 15,17 angeschlossen. Element 7 ist angeschlossen an die Schichten 17 und 24, Element 8 an 17 und 25 und Element 9 an 17 und 26. Wie aus den Figuren 3 und 5 ersichtlich, unterscheiden sich diese stecknadelartigen Elemente lediglich durch die Länge ihrer nadelartigen Teile 21 - 23. Sämtliche Elemente, deren nadelartigen Teile so lang sind, dass sie mit den Schichten 17 und 26 in eingestecktem Zustand elektrisch verbunden sind, leuchten nur dann auf, wenn diese Schichten mit der Spannungsquelle verbunden sind. Sämtliche Elemente, deren Nadellänge dem Element 8 entsprechen leuchten, wenn Schicht 17 und 25 mit der Spannungsquelle verbunden sind und so weiter.

Die Einrichtung mit dem Aufbau nach den Figuren 3 und 5 mit fünf elektrisch leitenden Schichten, erlauben daher vier Gruppen von leuchtenden Köpfen zu bilden, die je für sich oder in willkürlicher Kombination aufleuchten. Das wahlweise Einschalten dieser Gruppen wird durch das Betätigen des Vielfachschalters 10 bewirkt. Es dürfte klar sein, dass statt einer Speisung aus dem Netz auch eine Speisung durch Batterien möglich ist.

Patentanwälte
P. D. Feldmann, Dipl. Ing ETH
C. P. Feldmann, Ing. HTL
Members of AIPPI

Patentanwaltsbüro Feldmann A(

Günther K u h n                    — 8 —
Kronenplatz 2
CH-7310   Bad Ragaz

P a t e n t a n s p r ü c h e

1. Vorrichtung die eine frei wählbare Markierung auf Landkarten oder anderen graphischen Darstellungen die auf einer Unterlage aufgezogen sind, mittels in die Unterlage einsteckbaren stecknadelartigen Elementen ermöglicht, dadurch gekennzeichnet, dass die Unterlage (1) sandwichartig aus mindestens zwei Schichten von wechselweise durchstechbarem, isolierenden (14,16,18) und durchstechbarem, elektrisch leitenden (15,17 ) an eine Spannungsquelle (12) angeschlossenem Material aufgebaut ist, und dass die stecknadelartigen Elemente einen elektrisch leuchtenden Kopf (30) aufweisen, der mit zwei nadelartigen Teilen (21,22) versehen ist, die eine unterschiedliche Länge, entsprechend der Dicke der zu durchstechenden, isolierenden Schichten aufweisen und von denen der längere Teil (22) entlang einem Teil seiner Länge mit einer isolierenden Schicht (23) versehen ist.

2. Vorrichtung nach Anspruch 1, dadurch gekennzeichnet, dass die beiden nadelartigen Teile (21,22) des stecknadelartigen Elementes (20,30) konzentrisch zueinander angeordnet sind.

3. Vorrichtung nach Anspruch 1, dadurch gekennzeichnet, dass die beiden nadelartigen Teile des stecknadelartigen Elementes (20,30) parallel und nebeneinander angeordnet sind.

4. Vorrichtung nach Anspruch 1, dadurch gekennzeichnet, dass die Unterlage mehr als zwei elektrisch leitende Schichten (15,17,24,25,26) umfasst und dass die länge der Isolierschicht (23) des längeren nadelartigen Teiles (22) des stecknadelartigen Elementes (20,30) sich über die zweite leitende Schicht (15) hinaus erstreckt.

5. Vorrichtung nach Anspruch 1, dadurch gekennzeichnet, dass die Spannungsquelle einen an das Leitungsnetz angeschlossenen Transformator (12) umfasst, der die Netzspannung heruntertransformiert und damit die leitenden Schichten (15,17; 15,17,24,25,26) speist.

6. Vorrichtung nach Anspruch 4 und 5, dadurch gekennzeichnet, dass die Spannungsquelle mittels einr Schaltvorrichtung (10) wahlweise an verschiedene der elektrisch leitenden Schichten anlegbar ist.

7. Vorrichtung nach Anspruch 1, dadurch gekennzeichnet, dass die Spannungsquelle mit einer Kurzschlusssicherung ausgerüstet ist.

8. Vorrichtung nach Anspruch 1, dadurch gekennzeichnet, dass die stecknadelartigen Elemente (20,30) unterschiedliche Köpfe (30) aufweisen.

0057157

kug 2/

9. Vorrichtung nach Anspruch 8, dadurch gekennzeichnet, dass die Köpfe (30) sich in Grösse und/oder Farbe und/oder Leuchtkraft unterscheiden.

Fig.1

0057157

1/2

Fig.2

Fig.3

Fig.4

Fig.5

Fig.6

Fig.7

2/2

0057157